# FASCICULE DE BREVET EUROPEEN

(11) **EP 2 836 642 B1**
(45) Date de publication et mention de la délivrance du brevet: **28.12.2016**
(21) Numéro de dépôt: 13720001.0
(22) Date de dépôt: 12.04.2013
(51) Int. Cl.: E01C 19/10

(54) **DISPOSITIF DE FABRICATION DE PRODUITS ENROBÉS À CHAUD À SORTIE DÉRIVÉE ET MALAXEUR EXTERNE ET PROCÉDÉ DE FABRICATION D'ENROBÉS A CHAUD CORRESPONDANTS**
VORRICHTUNG ZUR HERSTELLUNG VON HEISSBESCHICHTETEN PRODUKTEN MIT EINEM VERZWEIGTEN AUSLASS UND EINEM EXTERNEN MISCHER SOWIE VERFAHREN ZUR HERSTELLUNG DIESER HEISSBESCHICHTETEN PRODUKTE
DEVICE FOR PRODUCING HOT COATED PRODUCTS HAVING A BRANCHED OUTLET AND EXTERNAL MIXER AND METHOD FOR PRODUCING CORRESPONDING HOT COATED PRODUCTS

(30) Priorité: 13.04.2012 FR 1253449
(43) Date de publication de la demande: 18.02.2015
(73) Titulaire: Argumat, 69970 Chaponnay (FR)
(72) Inventeur: CARRASCO, Antoine, F-69970 Marennes (FR)
(74) Mandataire: Martin, Didier Roland Valéry
(86) Numéro de dépôt international: PCT/FR2013/050799
(87) Numéro de publication internationale: WO 2013/153341

(56) Documents cités:
- EP-A1- 0 352 648
- EP-A1- 0 442 790

## Description

### DOMAINE TECHNIQUE

La présente invention se rapporte au domaine technique général des dispositifs et procédés de fabrication de produits enrobés à chaud, par exemple avec du bitume, pour obtenir des produits enrobés bitumineux, à partir d'une masse d'agrégats ou de produits granuleux solides, qu'il s'agisse de granulats neufs et froids et/ou de produits bitumineux usagés à recycler ou encore d'un mélange des deux, en vue de réaliser, un produit enrobé fini utilisable par exemple dans le domaine de la construction et des travaux publics.

La présente invention concerne plus particulièrement un dispositif de fabrication de produits enrobés à chaud, par exemple avec du bitume, comprenant :
- un four comprenant une enceinte sensiblement cylindrique destinée à être mise en rotation autour de son axe longitudinal par un moyen d'entraînement, ladite enceinte étant pourvue vers ses deux extrémités opposées, d'une part d'une entrée principale destinée à recevoir des produits granuleux vierges non enrobés ou recyclés ou un mélange des deux, du genre cailloux ou granulats, et d'autre part d'une sortie principale pour les produits enrobés bitumineux fabriqués dans l'enceinte, lesdits produits granuleux circulant de l'entrée principale vers la sortie selon un sens F pour se transformer en produits enrobés à la sortie principale, après passage et traitement dans l'enceinte,
- un moyen de chauffe définissant une section de combustion dans l'enceinte et générant un flux de séchage apte à assurer le séchage des produits granuleux, ladite enceinte se poursuivant à partir de la dite section de combustion par une section de séchage puis par une section de malaxage.

L'invention concerne également un procédé de fabrication d'enrobés à chaud mettant en oeuvre un tambour sécheur enrobeur délimité par une entrée principale et une sortie principale, ledit tambour sécheur enrobeur étant composé d'une série de sections successives comprenant une section de combustion, une section de séchage et une section de malaxage.,

### TECHNIQUE ANTERIEURE

Les dispositifs de fabrication de produits enrobés à chaud, en particulier de produits enrobés bitumineux, sont connus et sont généralement constitués de fours rotatifs qualifiés généralement de tambours sécheurs enrobeurs (TSE). Les techniques mises en oeuvre peuvent être des techniques dites en continu ou en discontinu et s'opérer, selon le déplacement relatif du flux de chauffe et des granulats, suivant les techniques dites à courant parallèle (ou encore équi-courant) ou à contre-courant.

Les dispositifs et procédés de fabrication connus mettent en oeuvre un four de séchage se présentant généralement sous la forme d'un corps de révolution cylindrique définissant une enceinte présentant au moins une entrée à l'une de ses extrémités et une sortie à l'autre extrémité, le four de séchage étant entraîné en rotation par tout moyen approprié pendant que la masse d'agrégats ou cailloux à traiter est introduite par une extrémité de manière à progresser vers l'extrémité de sortie pour être traitée.

La rotation de l'enceinte permet ainsi de faire circuler les agrégats qui entrent froids et humides par l'entrée, en direction de l'autre extrémité de sortie tout en les remuant et en les relevant dans l'enceinte à l'aide de tout moyens appropriés, et par exemple à l'aide d'aubes de relevage montées sur les périphéries internes des parois de l'enceinte.

Les fours connus mettent également en oeuvre un flux chauffant produit par un brûleur associé à l'enceinte, lequel brûleur fournit une flamme dans une zone de combustion de l'enceinte, la flamme émettant un flux d'air chaud qui circule, selon le type de four, à contre courrant ou dans les sens de circulation des agrégats froids et humides à l'intérieur de l'enceinte.

En règle générale, les fours rotatifs connus mettent en oeuvre un tambour sécheur enrobeur délimité par une entrée principale et une sortie principale et qui est composé d'une série de sections successives comprenant, en considération du sens de progression des granulats à l'intérieur du four, une section de combustion, puis une section de séchage et enfin une section de malaxage.

Le fonctionnement traditionnel de ces fours rotatifs classiques implique que les granulats, qu'il s'agisse de granulats neuf ou usagés voire, d'un mélange des deux, passent obligatoirement par la section finale de malaxage au sein de laquelle on injecte de manière automatisée et régulée une fraction de bitume liquide qu'il convient précisément dé mélanger dans la zone de malaxage avec les granulats pour obtenir le produit final à la sortie de ladite zone de malaxage.

Cette technique donne généralement satisfaction mais n'est pas parfaitement adaptée à tous les types de produits enrobés et susceptibles d'être fabriqués et notamment les produits enrobés dit « *spéciaux »* pour lesquels des conditions particulières de mélanges peuvent être souhaitées ou requises, ces conditions particulières de mélanges ne devant pas impliquer, du moins à ce stade de fabrication, un passage dans la zone de malaxage conduisant à un mélange immédiat avec du bitume liquide. Il peut en effet être nécessaire d'avoir recours à des traitements divers préalablement à un enrobage avec du bitume, où il peut s'avérer nécessaire d'effectuer des opérations particulières sur les granulats chauds, par exemple de mise en couleur des granulats après séchage.

En pratique, et même s'il ne s'agit pas d'une solution optimale, la fabrication d'enrobés spéciaux est effectuée par passage dans la zone de malaxage du tambour sécheur enrobeur classique ce qui d'une part accélère leur usure et d'autre part conduit à fabriquer des produits enrobés spéciaux dans des conditions qui né sont pas optimales à la fois sur le plan technique et également sur le plan économique. En effet, la fabrication d'enrobés spéciaux dans un dispositif qui n'est pas directement adapté à ce type de fabrication nécessite un nouveau réglage des paramètres de fonctionnement du tambour sécheur enrobeur avec des pertes de temps et de produits afférentes liées à l'élimination des rebuts de début et fin de fabrication. Ceci conduit généralement à une perte économique globale.

En outre, il est fait référence aux documents EP 0 442 790 A1 et EP 0 352 648 A1.

### EXPOSE DE L'INVENTION

Les objets assignés à l'invention visent par conséquent à remédier aux différents inconvénients énumérés précédemment et à proposer un nouveau dispositif et un nouveau procédé de fabrication de produits enrobés à chaud, par exemple avec du bitume, qui soient particulièrement polyvalents et capables de s'adapter à divers es situations de production industrielle.

Un autre objet de l'invention vise à proposer un nouveau dispositif et un nouveau procédé de fabrication de produits enrobés à chaud qui soient particulièrement simples, efficaces à mettre en oeuvre et économiques.

Un autre objet de l'invention vise à proposer un nouveau dispositif et un nouveau procédé de fabrication de produits enrobés à chaud qui soient particulièrement robustes et qui mettent en oeuvre des moyens techniques éprouvés.

Les objets assignés à l'invention sont atteints à l'aide d'un dispositif de fabrication de produits enrobés à chaud, par exemple avec du bitume, comprenant :
- un four comprenant une enceinte sensiblement cylindrique destinée à être mise en rotation autour de son axe longitudinal par un moyen d'entraînement, ladite enceinte étant pourvue vers ses deux extrémités opposées, d'une part d'une entrée principale destinée à recevoir des produits granuleux vierges non enrobés ou recyclés ou un mélange des deux, du genre cailloux ou granulats, et d'autre part d'une sortie principale pour les produits enrobés bitumineux fabriqués dans l'enceinte, lesdits produits granuleux circulant de l'entrée principale vers la sortie selon un sens F pour se transformer en produits enrobés à la sortie principale, après passage et traitement dans l'enceinte,
- un moyen de chauffe définissant une section de combustion dans l'enceinte et générant un flux de séchage apte à assurer le séchage des produits granuleux, ladite enceinte se poursuivant à partir de la dite section de combustion par une section de séchage puis par une section de malaxage caractérisé en ce qu'il est pourvu d'une sortie dérivée intégrée entre la section de séchage et la section de malaxage, et d'un malaxeur externe comportant une entrée et une sortie, ledit malaxeur externe étant relié à ladite sortie dérivé laquelle est équipée d'un système d'obturation qui est mobile entre une position d'ouverture autorisant le passage des produits granuleux vers l'entrée du malaxeur externe et une position de fermeture autorisant le passage des produits granuleux vers la section de malaxage.

Les objectifs assignés à l'invention sont également atteints à l'aide d'un procédé de fabrication d'enrobés à chaud dans un dispositif unique comportant d'une part un tambour sécheur enrobeur délimité par une entrée principale et une sortie principale, ledit tambour sécheur enrobeur étant composé d'une série de sections successives comprenant une section de combustion, une section de séchage et une section de malaxage et d'autre part un malaxeur externe raccordé en continu à la section de séchage par une sortie dérivée, ledit procédé étant tel qu'on peut assurer sélectivement et en continu, la fabrication d'enrobés à chaud par malaxage soit dans la section de malaxage du tambour, soit dans le malaxeur externe à partir de la section de séchage du tambour et ensuite diriger les enrobés à chaud fabriqués vers une sortie commune au dispositif unique pour les récupérer:

### DESCRIPTIF SOMMAIRE DES DESSINS

D'autres particularités et avantages de l'invention apparaîtront et ressortiront plus en détails à la lecture de la description faite ci-après, en référence aux dessins annexés, donnés uniquement à titre d'exemple illustratif et non limitatif, dans lesquels :
- La figure 1 illustre, selon une vue en perspective, un dispositif de fabrication de produits enrobés à chaud conforme à l'invention.
- La figure 2 illustre, selon une vue latérale, le dispositif de fabrication de produits enrobés à chaud conforme à l'invention et illustré à la figure 1.
- La figure 3 illustre, selon une vue en perspective, une variante d'un dispositif de fabrication de produits enrobés à chaud conforme à l'invention.
- La figure 4 illustre, selon une vue en perspective arrière, une autre variante de réalisation d'un dispositif de fabrication de produits enrobés à chaud conforme à l'invention.
- La figure 5 illustre, selon une vue en coupe transversale schématique, un détail de réalisation d'un dispositif conforme à l'invention.

### MEILLEURE MANIERE DE REALISER L'INVENTION

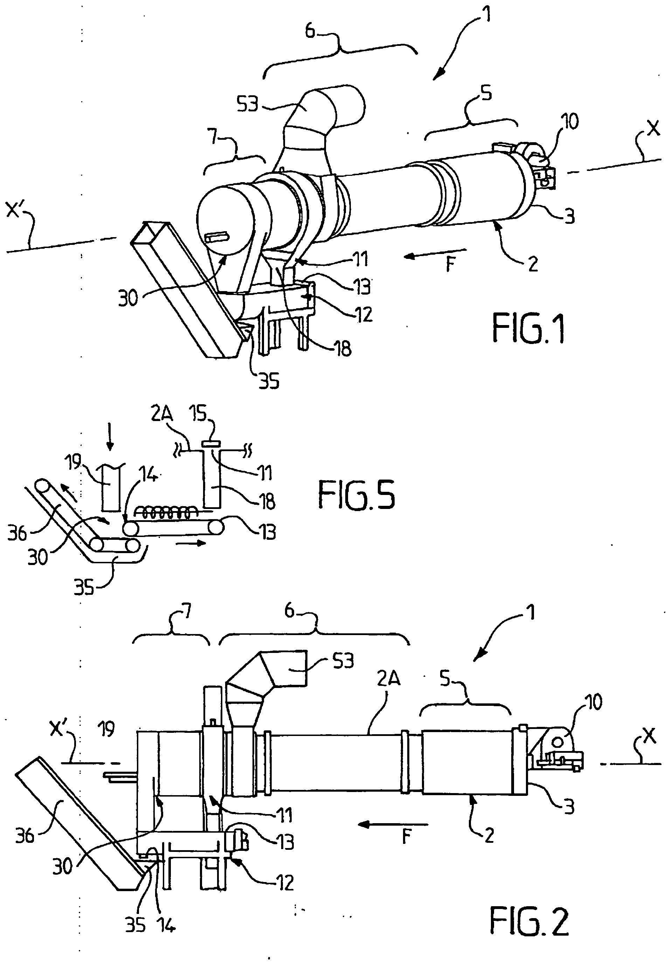

La figure 1 illustre selon une vue en perspective, une vue générale d'un dispositif de fabrication de produits enrobés à chaud conforme à l'invention et, par exemple, destiné à fabriquer dés produits enrobés avec du bitume, pour fabriquer des produits enrobés bitumineux.

Le dispositif illustré à la figure 1 est, à titre purement illustratif, un dispositif dit à courant parallèle dans la mesure où lé flux chauffant F circule dans la même direction que la direction d'alimentation et de progression des produits granuleux illustrés par la flèche F à l'intérieur du dispositif.

Il doit néanmoins être noté que l'invention pourra également s'appliquer à des dispositifs de fabrication de produits enrobés à chaud, notamment bitumineux, dit « à *contre*-*courant* », dispositifs dans lesquels le flux chauffant F circule dans le sens inverse de celui dés produits enrobés à sécher et à transformer en produits enrobés bitumineux.

De la même façon, le dispositif de fabrication de produits enrobés à chaud conforme à l'invention sera soit un dispositif de fabrication continu, soit un dispositif de fabrication discontinu de produits enrobés chauds.

Le dispositif de fabrication de produits enrobés à chaud illustré à la figure 1 comprend un four 1 ou tambour sécheur enrobeur comprenant une enceinte 2 sensiblement cylindrique destinée à être mise en rotation autour de son axe longitudinal X-X' par un moyen d'entraînement (non représenté aux figures), ladite enceinte 2 étant pourvue vers ses deux extrémités opposées, d'une part d'une entrée principale 3 destinée à recevoir des produits granuleux vierges et non enrobés ou recyclés ou un mélange des deux, du genre cailloux ou granulats, et d'autre part une sortie principale 30 pour les produits enrobés bitumineux fabriqués dans l'enceinte 2, lesdits produits granuleux circulant de l'entrée principale 3 vers la sortie 30 selon un sens F pour se transformer en produits enrobés à la sortie principale 30, après passage et traitement dans l'enceinte 2.

De manière bien connue de l'homme du métier, les moyens d'entraînements (non représentés aux figures) comprendront, de manière connue en soit, une source d'énergie, du genre moteur, entraînant l'enceinte 2 elle-même, par une série d'engrenages ou d'entraînements conventionnels, constitués par exemple de galets venant en prise sur des moyens d'entraînement solidaires de la paroi externe 2A de l'enceinte 2.

Ainsi, le dispositif de fabrication de produits enrobés à chaud selon l'invention est un tambour sécheur enrobeur composé, à partir de l'entrée 3, d'une série de sections successives ayant chacune une fonction spécifique, les sections successives comprenant une section de combustion 5, une section de séchage 6 et une section de malaxage 7 débouchant vers ou dans la sortie principale 30.

Au sens de l'invention, on entendra par l'expression *« produit granuleux vierges non enrobés»* tout type du produit du genre agrégats, cailloux, le granulat, le sable ou autre, présentant une résistance mécanique suffisante pour être utilisé dans la fabrication du produit enrobé de toutes sortes susceptibles d'être utilisés comme matériaux de construction dans le domaine des travaux publics, tels que les routes ou murs, sans que de telles applications soient pour autant limitatives.

De la même manière, au sens de l'invention on entendra par l'expression « *produits granuleux recyclés »* tout type de produits du genre agrégats, cailloux, granulats, sables ou autres ayant déjà été utilisés en tant que matériaux de construction de route ou autres ayant déjà été à ce titre pourvus d'un enrobage à base de bitume, tels produits étant donc destinés à être recyclés et leur enrobage initial étant réutilisé. L'ensemble de ces produits granuleux vierges ou recyclés présentent donc une granulométrie très hétérogène, une composition physique et chimique également très hétérogène qui présente en outre des: tailles diverses, des formes, une teneur en humidité, une consistance etc. extrêmement variés.

D'une manière générale, le four rotatif est conçu pour que les produits granuleux vierges ou recyclés, ou un mélange des deux, circulent de l'entrée principale d'alimentation 3 vers la sortie principale 30 pendant la rotation de l'enceinte 2, pour se transformer, après passage successif : d'abord dans une zone de combustion 5 dans laquelle débouche l'entrée principale 3, ensuite dans la zone de séchage 6, pourvue par exemple d'aubes de relevage, et enfin dans la zone de malaxage 7 dans laquelle on peut également introduire, de manière optionnelle, et en continu par exemple, un produit d'enrobage liquide, par exemple du bitume, par le biais d'une tubulure (non représentée) de manière à produire un produit enrobé bitumineux final vers la sortie 30.

Tel qu'illustré à la figure 1, le dispositif de fabrication de produits enrobés à chaud conforme à l'invention comporte également un moyen de chauffe 10 associé à la section de combustion 5, ledit moyen de chauffe 10 étant donc disposé au voisinage de l'entrée principale 3 dans l'exemple spécifique de réalisation illustré. A titre d'exemple, le moyen de chauffe 10 est constitué par un brûleur produisant une flamme de séchage qui s'étend sensiblement axialement dans la zone centrale de la section de séchage 6 pour générer un flux de séchage circulant au sein de l'enceinte 2 selon la direction F et assurant ainsi le séchage des produits granuleux au sein de la section de séchage 6.

Le moyen de chauffe 10 définit donc la section de combustion 5 dans l'enceinte et génère un flux de séchage F apte à assurer le séchage des produits granuleux, ladite enceinte se poursuivant à partir de ladite section de combustion 5 et en contigué selon le sens F, par une section de séchage 6 puis par une section de malaxage 7.

Ainsi, selon des caractéristiques importantes de l'invention, le dispositif de fabrication de produits enrobés à chaud est pourvu d'une sortie dérivée 11 intégrée entre la section de séchage 6 et la section de malaxage 7 et d'un malaxeur externe 12 comportant une entrée 13 et une sortie 14, ledit malaxeur externe 12 étant relié à la sortie dérivée 11 laquelle est équipée d'un système d'obturation 15 qui est mobile entre une position d'ouverture autorisant le passage des produits granuleux, en cours de traitement au sein de l'enceinte: 2 à la fin de la section de séchage 6, vers l'entrée 13 du malaxeur externe 12, et une position de fermeture autorisant le passage des produits granuleux vers la section de malaxage 7 de l'enceinte 2.

La sortie dérivée 11 forme ainsi une sortie secondaire ou une sortie anticipée au sein de l'enceinte 2 dans la mesure où elle permet aux produits granuleux qui sont en cours de traitement au sein de l'enceinte 2 et qui sont sur le point de quitter la section de séchage 6 de sortir de l'enceinte 2 de manière anticipée au lieu de pénétrer dans la section de malaxage 7. De manière bien connue de l'homme du métier, la sortie dérivée 11 sera formée par exemple par une ouverture ménagée dans la paroi 2A de l'enceinte 2, laquelle sortie dérivée est équipée de tout système d'obturation bien connu de l'homme du métier, du genre trappe mobile ou équivalent susceptible d'être commandée manuellement et/ou électriquement voire hydrauliquement par tout moyen de commande approprié centralisé ou non.

Ainsi, selon la position du système d'obturation 15, les produits granuleux chauds sont évacués de la section de séchage 6 vers la section de malaxage 7 de l'enceinte 2 où sont au contraire évacués hors de l'enceinte 2 sans passer par la section de malaxage 7 pour être traités au sein du malaxeur externe 12.

Ces particularités constructives conduisent à la réalisation d'un dispositif de fabrication de produits enrobés à chaud qui intègre dans un même dispositif deux unités dé malaxage, savoir la section de malaxage 7 de l'enceinte 2 ainsi qu'un malaxeur externe 12 intégré et relié à la sortie dérivée 11 de l'enceinte 2 de manière à former un dispositif unique.

Cette particularité constructive permet de réaliser un dispositif de fabrication de produits enrobés à chaud polyvalent permettant au choix de réaliser deux types dé malaxage différents au sein d'un même dispositif et d'un même cycle dé fabrication sans avoir à utiliser et régler deux machines distinctes.

Selon une caractéristique additionnelle et particulièrement intéressante de l'invention, la sortie 14 du malaxeur externe 12 et la sortie principale 30 de l'enceinte 2 sont agencés relativement pour déboucher sur et dans une sortie commune 35 du dispositif de fabrication de produits enrobés à chaud, laquelle sortie commune 35 est donc elle aussi intégrée dans le dispositif unique de l'invention.

De cette façon, le dispositif de fabrication de produits enrobés à chaud conforme à l'invention possède une seule et unique sortie commune 35 des produits enrobés à chaud finis ce qui confère au dispositif une grande souplesse et polyvalence de fonctionnement.

De manière particulièrement avantageuse, le malaxeur externe 12 est disposé sous la section de malaxage 7, et de préférence sensiblement au droit de la section de malaxage 7, et est connecté d'une part à la sortie dérivée 11 par une goulotte d'arrivée 18 débouchant au dessus de l'entrée 13 et d'autre part à la sortie commune 35 par sa sortie 14 au dessus et au droit de laquelle débouche une goulotte de descente 19 connectée à la sortie principale 30 de l'enceinte 2.

De cette façon, lé dispositif selon l'invention autorise une double possibilité dé fonctionnement du four qui peut ainsi s'adapter à plusieurs conditions de fonctionnement et par exemple :
- soit à la production d'enrobés bitumineux par passage à travers la section de malaxage 7 avec injection du bitume au sein de ladite section de malaxage 7,
- soit à la production dé granulats chauds « spéciaux » en vue d'un mélange avec du bitume et/ou d'autres ingrédients dans le malaxeur externe 12.

De manière particulièrement avantageuse, le système d'obturation 15 peut être formé de telle façon que la sortie dérivée 11 soit couplée à un anneau interne (non représenté) monté de manière concentrique sur l'enceinte 2 et à sa périphérie, ledit anneau étant monté déplaçable entre une position de fermeture et une position d'ouverture et positionnable dans l'une ou l'autre de ces deux positions en regard de la sortie dérivée 11.

L'anneau est pourvu d'une ou plusieurs ouvertures qui viennent en coïncidence avec la sortie dérivée 11 de l'enceinte 2 lorsque l'anneau est en position d'ouverture correspondant à l'évacuation des granulats vers le malaxeur externe 12.

Selon une autre caractéristique importante de l'invention, la sortie commune 35 est reliée à un convoyeur de sortie 36, de type convoyeur à raclettes ou à tapis par exemple.

On dispose ainsi d'un dispositif de fabrication de produits enrobés à chaud qui constitue une installation complète et unique.

Selon cette caractéristique, la sortie commune 35 forme une trémie de réception formant l'élément d'alimentation du convoyeur de sortie 36, la sortie 14 du malaxeur externe 12 et la goulotte de descente 19 de l'enceinte 2 débouchant au droit et au-dessus de ladite sortie commune 35.

De manière particulièrement avantageuse, le malaxeur externe 12 peut être un malaxeur à palettes ou rotatif (figure 5), étant entendu que d'autres types de malaxeurs sont bien évidemment envisageables.

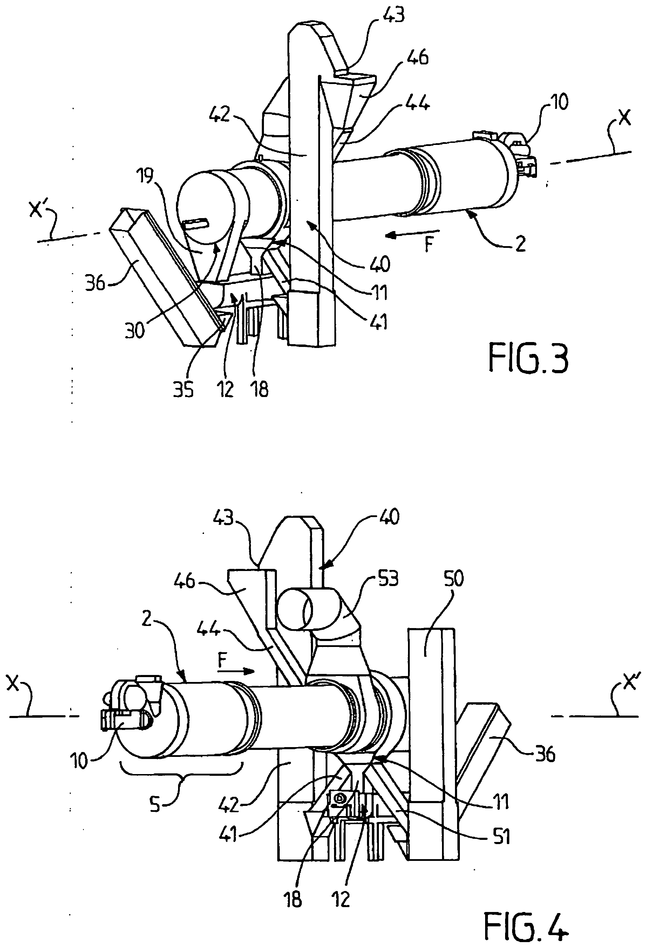

Tel qu'illustré à la figure 3, et selon une variante préférentielle de l'invention, le dispositif de fabrication de produits enrobés à chaud conforme à l'invention peut également comporter un système de recyclage des rebuts 40 de début et fin de cycle de fabrication.

Le système de recyclage des rebuts 40 est connecté à l'intérieur de l'enceinte 2 au voisinage de la sortie déportée 11, par exemple par un canal de descente 41, de manière à pouvoir diriger les rebuts vers le sysème de recyclage de rebuts 40 avant leur passage dans la section de malaxage 7.

De préférence, le canal de descente est branché sur l'enceinte 2 dans la partie haute de la goulotte d'arrivée 18.

Selon cette disposition, le canal de descente 41 assure la connexion entre le voisinage de la sortie dérivée 11 et le système de recyclage des rebuts 40, lequel redirige les rebuts, soit vers l'extérieur de l'enceinte 2, soit directement dans l'enceinte 2 même, vers la section de séchage 6 par exemple.

Selon l'invention, le système de recyclage des rebuts 40 comprend un convoyeur de recyclage 42, de préférence monté verticalement, dont le brin d'entrée (non représenté) est situé en partie basse et connecté au voisinage de la sortie dérivée 11 par l'intermédiaire du canal de descente 41 et dont le brin de sortie 43, situé en partie haute débouche dans l'enceinte 2 par l'intermédiaire d'une trémie de stockage 46, de préférence dans la zone de séchage 6.

Grace à ce montage, il est possible de stocker les rebuts de début et fin de cycle de fabrication dans la trémie de stockage 46, puis, une fois le: cycle de fabrication terminé, de diriger le contenu de la trémie de stockage 46 vers le malaxeur externe 12 via l'enceinte 2 et la goulotte d'arrivée 18. Il est alors possible d'assurer au sein du malaxeur externe 12, un traitement complet et de qualité, des rebuts pour tes transformer en produits finis, savoir des produits enrobés à chauds de qualité.

Tel qu'illustré, le convoyeur de recyclage 42 est monté sensiblement vertical et de manière latérale en regard de l'enceinte 2 tout en débouchant au-dessus de l'enceinte 2 et dans cette dernière, sensiblement au droit de la sortie dérivée 11 par l'intermédiaire d'une conduite secondaire 44.

Selon une autre variante de réalisation illustrée à la figure 4, le dispositif de fabrication de produits enrobés à chaud peut également comporter un élévateur d'alimentation externe 50 connecté à la sortie dérivée 11 et alimentant par exemple une tour d'enrobage existante.

Tel qu'illustré à la figure 4, laquelle ne diffère de la variante illustrée à la figure 3 que par l'adjonction de l'élévateur d'alimentation externe 50, ce dernier est connecté à la sortie dérivée 11 par l'intermédiaire d'une conduite 51 dont la partie haute est branchée ou connectée à la sortie dérivée 11 et dont la partie basse est connectée à la partie basse de l'élévateur d'alimentation externe 50. Avantageusement, ce dernier se présente sous la forme d'une tour sensiblement verticale implantée latéralement sur le dispositif conforme à l'invention sur le côté opposé au côté sur lequel est installé le convoyeur de recyclage 40 lequel est connecté à une tour d'enrobage classique.

Tel qu'illustré, le dispositif de fabrication de produits enrobés à chaud conforme à l'invention peut également comporter une tubulure 53 connectée à l'intérieur de l'enceinte 2, de préférence au niveau de la section de séchage et permettant d'évacuer les gaz de combustion dans un dispositif approprié de retraitement (non représenté).

L'invention concerne également un procédé de fabrication d'enrobés à chaud qui présente la particularité d'être mis en oeuvre dans un dispositif unique formant une installation complète comportant d'une part un tambour sécheur enrobeur 2 délimité par une entrée principale 3 et une sortie principale 30, ledit tambour sécheur enrobeur 2 étant composé d'une série de sections successives comprenant une section de combustion 5, une section de séchage 6 et une section de malaxage 7 et d'autre part un malaxeur externe 12 raccordé en continu à la section de séchage 6, ledit procédé étant tel qu'on peut assurer sélectivement et en continu, la fabrication d'enrobés à chaud par malaxage soit dans la section de malaxage du tambour 2, soit dans le malaxeur externe 12 à partir de la section de séchage 6 du tambour 2, et ensuite diriger les enrobés à chaud fabriqués vers une sortie commune 35 au dispositif unique pour les récupérer.

Le dispositif conforme à l'invention permet ainsi d'assurer des cycles de fabrication de produits enrobés à chaud soit par malaxage des produits granuleux dans le four formant l'enceinte 2, soit par le biais du malaxeur externe 12 sans avoir à changer de dispositif et tout en gardant la même sortie pour le produit enrobé fini.

Le procédé selon l'invention permet également d'assurer le recyclage des rebuts de débuts et fins de cycles de fabrication de manière particulièrement efficace et simple.

On assure en effet le recyclage des rebuts de début ou de fin de cycles de fabrication en stockant les rebuts dans une trémie de stockage 46 connectée à un système de recyclage 40 relié au tambour, c'est-à-dire à l'enceinte 2 au voisinage de la sortie dérivée 11. La trémie de stockage 46 est en effet de contenance suffisante (1 à 4 tonnes par exemple) pour servir de trémie tampon pendant un cycle complet de fabrication.

Le cycle de fabrication terminé, on évacue les rebuts de la trémie de stockage 46 vers le malaxeur externe 12 pour effectuer leur transformation en produits enrobés à chaud dans ledit malaxeur externe 12. On utilise alors la goulotte d'arrivée 18 pour faire passer les rebuts de la trémie de stockage 46 vers l'entrée 13 du malaxeur externe 12 au sein duquel les rebuts de débuts et fin du ou des cycles de fabrication sont traités et malaxés pour être transformés en produits enrobés à chauds.

Selon l'invention, le dispositif est formé par un dispositif à flux parallèle ou à contre-courant, le flux chauffant F pouvant indifféremment circuler dans la même direction que la direction de progression des produits granuleux ou en sens inverse, c'est-à-dire à contre-courant.

Le fonctionnement du dispositif conforme à l'invention est le suivant.

En cours de fonctionnement et selon un cycle continu ou discontinu, au cours duquel les granules à chaud avancent dans l'enceinte 1 selon la direction F et de manière continue ou discontinue, les produits granuleux sont transportés de l'entrée 3 vers la sortie 30 ou vers la sortie dérivée 11 en passant successivement à travers toutes les sections 5, 6 et éventuellement 7 du dispositif pour être extraits par la sortie 30 ou la sortie différée 11.

En règle générale, on assure la fabrication d'enrobés à en utilisant la section de malaxage 7 du tambour sécheur enrobeur pour l'enrobage de produits granuleux standards.

Selon cette option de fonctionnement, les produits granuleux sont évacués par l'intermédiaire de la sortie principale 30 en étant guidés par la goulotte de descente 19 vers la sortie commune 35 pour être ensuite évacués par le convoyeur de sortie 36. Lorsque l'on souhaite fabriquer des produits enrobés à chaud spéciaux, dont la gestion des phases d'enrobage et de mélange est plus complexe, on utilise le malaxeur externe 12. Des réglages spécifiques sont en effet nécessaires pour assurer l'enrobage à chaud de produits granuleux en les mélangeant avec des colorants ou des matières plastiques, le: mélange de divers composants étant par ailleurs réalisé de manière optimale avec des dispositifs spéciaux.

Dans un tel cas, le système d'obturation 15 est placé dans sa position d'ouverture de manière à autoriser le déversement des produits granuleux par l'intermédiaire de la goulotte de descente 18 dans le malaxeur externe 12 au niveau de son entrée 13.

Après mélange et traitement appropriés au sein du malaxeur externe 12, le produit enrobé bitumineux « *spécial »* final débouche sur et dans la sortie commune 35 de façon à pouvoir être évacué par le convoyeur de sortie 36.

Au besoin, au début ou à la fin du cycle de fabrication des produits enrobés bitumineux, qu'ils soient réalisés par le biais de la section de malaxage 7 ou par le biais du malaxeur externe 12, on utilise le système de recyclage des rebuts 40 pour rediriger dans l'enceinte 2 les débuts et fins de cycle insuffisamment traités.

### POSSIBILITE D'APPLICATION INDUSTRIELLE

L'invention trouve son application industrielle dans la conception, la fabrication et l'utilisation de dispositifs de fabrication de produits enrobés à chaud, par exemple avec du bitume, ainsi que dans la mise en oeuvre de procédés de fabrication d'enrobés à chaud.

## Revendications

1. Dispositif de fabrication de produits enrobés à chaud, par exemple avec du bitume, comprenant :
- un four (1) comprenant une enceinte (2) sensiblement cylindrique destinée à être mise en rotation autour de son axe longitudinal (X-X') par un moyen d'entraînement, ladite enceinte (2) étant pourvue vers ses deux extrémités opposées, d'une part d'une entrée principale (3) destinée à recevoir des produits granuleux vierges non enrobés ou recyclés ou un mélange des deux, du genre cailloux ou granulats, et d'autre part d'une sortie principale (30) pour les produits enrobés bitumineux fabriqués dans l'enceinte (2), lesdits produits granuleux circulant de l'entrée principale (3) vers la sortie (30) selon un sens F pour se transformer en produits enrobés à la sortie principale (30), après passage et traitement dans l'enceinte (2),
- un moyen de chauffe (10) définissant une section de combustion (5) dans l'enceinte (2) et générant un flux de séchage apte à assurer le séchage des produits granuleux, ladite enceinte (2) se poursuivant à partir de la dite section de combustion (5) par une section de séchage (6) puis par une section de malaxage (7),
**caractérisé en ce qu'**il est pourvu d'une sortie dérivée (11) intégrée entre la section de séchage (6) et la section de malaxage (7), et d'un malaxeur externe (12) comportant une entrée (13) et une sortie (14), ledit malaxeur externe (12) étant relié à ladite sortie dérivée (11) laquelle est équipée d'un système d'obturation (15) qui est mobile entre une position d'ouverture autorisant le passage des produits granuleux vers l'entrée (13) du malaxeur externe (12) et une position de fermeture autorisant le passage des produits granuleux vers la section de malaxage (7).

2. Dispositif selon revendication 1 **caractérisé en ce que** la sortie du malaxeur externe (12) et la sortie principale (30) sont agencées relativement pour déboucher sur et dans une sortie commune (35).

3. Dispositif selon la revendication 2 **caractérisé en ce que** le malaxeur externe (12) est disposé sous la section de malaxage (7), et de préférence sensiblement au droit de la section de malaxage (7), et est connecté d'une part à la sortie dérivée (11) par une goulotte d'arrivée (18) débouchant au dessus de l'entrée (13) et d'autre part à la sortie commune (35) par sa sortie (14) au dessus et au droit de laquelle débouche une goulotte de descente (19) connectée à la sortie principale (30) de l'enceinte (2).

4. Dispositif selon l'une des revendications 2 ou 3 **caractérisé en ce que** la sortie commune (35) est reliée à un convoyeur de sortie (36), du type convoyeur à raclettes ou à tapis par exemple.

5. Dispositif selon l'une des revendications précédentes **caractérisé en ce que** le malaxeur externe (12) est un malaxeur à palettes ou rotatif.

6. Dispositif selon l'une des revendications précédentes **caractérisé en ce qu'**il comporte un système de recyclage des rebuts (40) de débuts et fins de cycles de fabrication.

7. Dispositif selon la revendication 6 **caractérisé en ce que** le système de recyclage des rebuts (40) est connecté à l'intérieur de l'enceinte (2) au voisinage de la sortie dérivée (11) par un canal de descente (41) de manière à pouvoir diriger les rebuts vers le système de recyclage de rebuts (40) avant leur passage dans la section de malaxage (7).

8. Dispositif selon la revendication 7 **caractérisé en ce que** le système de recyclage des rebuts (40) comprend un convoyeur de recyclage (42) dont le brin d'entrée est connecté au voisinage de la sortie dérivée (11) par l'intermédiaire du canal de descente (41) et dont le brin de sortie (43) débouche dans l'enceinte (2) par l'intermédiaire d'une trémie de stockage (46), de préférence dans la zone de séchage (6).

9. Dispositif selon la revendication 8 **caractérisé en ce que** le convoyeur de recyclage (42) est sensiblement vertical et débouche au dessus de l'enceinte (2) et dans cette dernière sensiblement au droit de la sortie dérivée (11) par l'intermédiaire d'une conduite secondaire (44).

10. Dispositif selon l'une des revendications précédentes **caractérisé en ce qu'**il comporte un élévateur d'alimentation externe (50) connecté à la sortie dérivée (11).

11. Procédé de fabrication d'enrobés à chaud dans un dispositif unique comportant d'une part un tambour sécheur enrobeur délimité par une entrée principale (3) et une sortie principale (30), ledit tambour sécheur enrobeur étant composé d'une série de sections successives comprenant une section de combustion (5), une section de séchage (6) et une section de malaxage (7) et d'autre part un malaxeur externe (12) raccordé en continu à la section de séchage (6) par une sortie dérivée (11), ledit procédé étant tel qu'on peut assurer sélectivement et en continu, la fabrication d'enrobés à chaud par malaxage soit dans la section de malaxage (7) du tambour, soit dans le malaxeur externe (12) à partir de la section de séchage (6) du tambour et ensuite diriger les enrobés à chaud fabriqués vers une sortie commune (35) au dispositif unique pour les récupérer.

12. Procédé selon la revendication 11 **caractérisé en ce qu'**on assure le recyclage des rebuts de débuts ou de fins de cycles de fabrication en stockant les rebuts dans une trémie de stockage connectée à un système de recyclage relié au tambour au voisinage de la sortie dérivée.

13. Procédé selon la revendication 12 **caractérisé en ce qu'**on évacue les rebuts de la trémie de stockage vers le malaxeur externe pour effectuer leur transformation en produits enrobés à chaud dans ledit malaxeur externe.

## Patentansprüche

1. Vorrichtung zur Herstellung von heißummantelten Produkten beispielsweise mit Bitumen, umfassend:
- einen Ofen (1) umfassend eine weitgehend zylindrische Kammer (2), die dazu bestimmt ist, durch ein Antriebsmittel um ihre Längsachse (X-X') gedreht zu werden, wobei die Kammer (2) in Richtung ihrer beiden einander gegenüberliegenen Enden einerseits mit einem Haupteinlass (3), der dazu bestimmt ist, granulöse, unbearbeitete, nicht ummantelte oder recycelte Produkte oder eine Mischung von beiden vom Typ Kiesel oder Granulat aufzunehmen, und andererseits mit einem Hauptauslass (30) für die mit Bitumen ummantelten Produkte, die in der Kammer (2) produziert wurden, ausgestattet ist, wobei die granulösen Produkte gemäß einer Richtung F vom Haupteinlass (3) zum Auslass (30) zirkulieren, um nach dem Durchlaufen der Kammer (2) und der dortigen Behandlung am Hauptauslass (30) als ummantelte Produkte anzukommen,
- eine Heizvorrichtung (10), die in der Kammer (2) einen Verbrennungsabschnitt (5) definiert und einen Trocknungsstrom generiert, der geeignet ist, die Trocknung der granulösen Produkte sicherzustellen, wobei in der Kammer (2) dem Verbrennungsabschnitt (5) ein Trocknungsabschnitt (6) und dann ein Mischabschnitt (7) folgt,
**dadurch gekennzeichnet, dass** sie mit einem Nebenauslass (11), der zwischen dem Trocknungsabschnitt (6) und dem Mischabschnitt (7) eingefügt ist, sowie mit einem externen Mischer (12), umfassend einen Einlass (13) und einen Auslass (14), ausgestattet ist, wobei der externe Mischer (12) an den Nebenauslass (11) angeschlossen ist, der mit einem Verschlusssystem (15) ausgestattet ist, das zwischen einer Öffnungsposition, die den Durchlauf der granulösen Produkte zum Einlass (13) des externen Mischers (12) erlaubt, und einer Schließposition, die den Durchlauf der granulösen Produkte zum Mischabschnitt (7) erlaubt, beweglich ist.

2. Vorrichtung nach Anspruch 1, **dadurch gekennzeichnet, dass** der Auslass des externen Mischers (12) und der Hauptauslass (30) jeweils so angeordnet sind, dass sie in und bei einem gemeinsamen Auslass (35) münden.

3. Vorrichtung nach Anspruch 2, **dadurch gekennzeichnet, dass** der externe Mischer (12) unter dem Mischabschnitt (7) und bevorzugt eindeutig beim Mischabschnitt (7) angeordnet ist und über eine Einlassrinne (18), die oberhalb des Einlasses (13) endet, einerseits mit dem Nebenauslass (11) und über seinen Auslass (14), oberhalb und bei dem eine Fallrinne (19), die an den Hauptauslass (30) der Kammer (2) angeschlossen ist, mündet, andererseits mit dem gemeinsamen Auslass (35) verbunden ist.

4. Vorrichtung nach einem der Ansprüche 2 oder 3, **dadurch gekennzeichnet, dass** der gemeinsame Auslass (35) mit einem Ausfuhr-Förderband (36), beispielsweise vom Typ Kratzboden oder Bandförderer, verbunden ist.

5. Vorrichtung nach einem der vorangehenden Ansprüche, **dadurch gekennzeichnet, dass** es sich beim externen Mischer (12) um einen Flügelmischer oder einen Rotationsmischer handelt.

6. Vorrichtung nach einem der vorangehenden Ansprüche, **dadurch gekennzeichnet, dass** sie ein Recyclingsystem für die Abfälle (40) umfasst, die zu Beginn und am Ende der Produktionszyklen anfallen.

7. Vorrichtung nach Anspruch 6 **dadurch gekennzeichnet, dass** das Abfallrecyclingsystem (40) im Bereich des Nebenauslasses (11) über einen Zuführungskanal (41) mit dem Inneren der Kammer (2) verbunden ist, sodass sie den Abfall zum Abfallrecyclingsystem (40) führen kann, bevor dieser in den Mischabschnitt (7) gelangt.

8. Vorrichtung nach Anspruch 7, **dadurch gekennzeichnet, dass** das Abfallrecyclingsystem (40) ein Recycling-Förderband (42) umfasst, dessen Eingangsstrang im Bereich des Nebenauslasses (11) über den Zuführungskanal (41) angeschlossen ist und dessen Ausgangsstrang (43) über ein Lagersilo (46) in der Kammer (2) mündet und zwar bevorzugt im Trocknungsabschnitt (6).

9. Vorrichtung nach Anspruch 8, **dadurch gekennzeichnet, dass** das Recycling-Förderband (42) eindeutig vertikal ist und über eine Nebenleitung (44) oberhalb der Kammer (2) und in dieser eindeutig beim Nebenauslass (11) mündet.

10. Vorrichtung nach einem der vorangehenden Ansprüche, **dadurch gekennzeichnet, dass** sie einen externen Versorgungsförderer (50) umfasst, der an den Nebenauslass (11) angeschlossen ist.

11. Verfahren zur Herstellung heißummantelter Produkte in einer einzigen Vorrichtung, umfassend einerseits eine Trocknungs- und Ummantelungstrommel, abgegrenzt durch einen Haupteinlass (3) und einen Hauptauslass (30), wobei sich die Trocknungs- und Ummantelungstrommel aus einer Abfolge aufeinanderfolgender Abschnitte umfassend einen Verbrennungsabschnitt (5), einen Trocknungsabschnitt (6) und einen Mischabschnitt (7) zusammensetzt, und andererseits einen externen Mischer (12), der über einen Nebenauslass (11) permanent an den Trocknungsabschnitt (6) angeschlossen ist, wobei das Verfahren so geartet ist, dass man selektiv und permanent die Produktion heißummantelter Produkte durch einen Mischvorgang entweder im Mischabschnitt (7) der Trommel oder im externen Mischer (12) ausgehend vom Trocknungsabschnitt (6) der Trommel gewährleisten und die heißummantelten Produkte anschließend zu einem gemeinsamen Auslass (35) bei der einzigen Vorrichtung lenken kann, um sie dort zu entnehmen.

12. Verfahren nach Anspruch 11, **dadurch gekennzeichnet, dass** das Recycling der Abfälle, die zu Beginn oder am Ende der Produktionszyklen anfallen, sichergestellt wird, indem die Abfälle in einem Lagersilo gelagert werden, das mit einem Recyclingsystem verbunden ist, das im Bereich des Nebenauslasses an die Trommel angeschlossen ist.

13. Verfahren nach Anspruch 12, **dadurch gekennzeichnet, dass** die Abfälle aus dem Lagersilo zum externen Mischer befördert werden, um sie im externen Mischer zu heißummantelten Produkten zu verarbeiten.

## Claims

1. A device for manufacturing hot-mix coated materials, e.g. materials coated with bitumen, the device comprising:
- an oven (1) comprising an enclosure (2) that is substantially cylindrical and designed to be caused to rotate about its longitudinal axis (X-X') by drive means, said enclosure (2) being provided in the vicinity of its two opposite ends, firstly with a main inlet (3) designed to receive non-coated virgin granular materials or recycled granular materials, or a mixture of both, of the type comprising chippings or granules, and secondly with a main outlet (30) for the bituminous coated materials that are manufactured inside the enclosure (2), said granular materials flowing from the main inlet (3) towards the outlet (30) along a direction F in order to be transformed into coated materials on reaching the main outlet (30), after passing through and being treated inside the enclosure (2),
- heater means (10) defining a combustion section (5) inside the enclosure (2) and generating a drying flow that is suitable for drying the granular materials, said enclosure (2) starting with said combustion section (5) and continuing with a drying section (6), and then with a mixing section (7);
the device being **characterized in that** it is provided with a bypass outlet (11) incorporated between the drying section (6) and the mixing section (7), and with an external mixer (12) including an inlet (13) and an outlet (14), said external mixer (12) being connected to said bypass outlet (11), which outlet is fitted with a blocking system (15) that is movable between an open position allowing granular materials to pass towards the inlet (13) of the external mixer (12) and a closed position allowing granular materials to pass towards the mixing section (7).

2. A device according to claim 1, **characterized in that** the outlet of the external mixer (12) and the main outlet (30) are arranged relative to each other so as to open out into a shared outlet (35).

3. A device according to claim 2, **characterized in that** the external mixer (12) is disposed under the mixing section (7), and preferably substantially in line with the mixing section (7), and is connected firstly to the bypass outlet (11) by an incoming chute (18) opening out above the inlet (13) and secondly to the shared outlet (35) via its outlet (14), above which and in line with which there opens out a down chute (19) that is connected to the main outlet (30) of the enclosure (2).

4. A device according to claim 2 or claim 3, **characterized in that** the shared outlet (35) is connected to an outlet conveyor (36), e.g. of the drag conveyer or of the belt conveyor type.

5. A device according to any preceding claim, **characterized in that** the external mixer (12) is a paddle mixer or rotary mixer.

6. A device according to any preceding claim, **characterized in that** it comprises a system (40) for recycling the scrap from the beginnings and the ends of production cycles.

7. A device according to claim 6, **characterized in that** the scrap recycling system (40) is connected to the inside of the enclosure (2) in the vicinity of the bypass outlet (11) by a down channel (41) in such a manner as to be capable of directing scrap towards the scrap recycling system (40) before it passes into the mixing section (7).

8. A device according to claim 7, **characterized in that** the scrap recycling system (40) comprises a recycling conveyor (42) having its inlet segment connected in the vicinity of the bypass outlet (11) via the down channel (41), and its outlet segment (43) opens out into the enclosure (2) via a storage hopper (46), preferably in the drying zone (6).

9. A device according to claim 8, **characterized in that** the recycling conveyor (42) is substantially vertical and opens out above the enclosure (2) and into said enclosure (2), substantially in line with the bypass outlet (11) via a secondary duct (44).

10. A device according to any preceding claim, **characterized in that** it includes an external feed elevator (50) connected to the bypass outlet (11).

11. A method of manufacturing hot-mix coated materials in a single device comprising firstly, a drum mixer defined by a main inlet (3) and a main outlet (30), said drum mixer being made up of a series of successive sections comprising a combustion section (5), a drying section (6), and a mixing section (7) and secondly an external mixer (12) connected continuously to the drying section (6) by a bypass outlet (11), said method being such that manufacturing hot-mix coated materials can be performed selectively and continuously by mixing, either in the mixing section (7) of the drum, or in the external mixer (12) from the drying section (6) of the drum and that the hot-mix coated materials manufactured may then be directed towards a shared outlet (35) of the single device for recovering them.

12. A method according to claim 11, **characterized in that** recycling of the scrap from the beginnings or the ends of production cycles is performed by storing the scrap in a storage hopper connected to a recycling system connected to the drum in the vicinity of the bypass outlet.

13. A method according to claim 12, **characterized in that** the scrap is discharged from the storage hopper to the external mixer in order to transform it into hot-mix coated materials in said external mixer.
